# EUROPEAN PATENT SPECIFICATION

(11) **EP 1 568 531 B1**
(45) Date of publication and mention of the grant of the patent: **15.10.2008**
(21) Application number: 05002175.7
(22) Date of filing: 02.02.2005
(51) Int. Cl.: B60K 15/03, B32B 27/32, B32B 27/18

(54) **Fuel container**
Kraftstoffbehälter
Conteneur de carburant

(30) Priority: 27.02.2004 JP 2004053531
(43) Date of publication of application: 31.08.2005
(73) Proprietor: NISSAN MOTOR CO., LTD., Yokohama-shi, Kanagawa 221-0023 (JP)
(72) Inventor: Kumagai, Hiroshi, Yamato-shi Kanagawa 242-0024 (JP); Himeki, Hiroaki, Sagamihara-shi Kanagawa 228-0811 (JP)
(74) Representative: Schaeberle, Steffen

(56) References cited:
- EP-A- 1 108 595
- US-A1- 2003 198 768

## Description

### BACKGROUND OF THE INVENTION

This invention relate to improvements in a fuel container used mainly as a fuel tank of an automotive vehicle, and more particularly to the fuel container having a multi-layer structure and formed of plastic or resin.

A fuel tank of an automotive vehicle is conventionally formed of metal; however, the material of the fuel tank is being shifted to plastic from the viewpoints of being light in weight, high in freedom in design, excellent in corrosion resistance and low in cost. As one of environmental protection measures, regulations for fuel evaporation from automotive vehicles are becoming strict in many countries. Accordingly, it is general that a fuel tank has a multi-layer structure which includes a barrier layer for preventing permeation of fuel.

As the fuel tank of the above type, there has been proposed one including a barrier layer formed of ethylene-vinyl alcohol copolymer (EVOH) resin excellent in permeation preventing characteristics for a mixture fuel containing alcohol, and two base material layers which are disposed on the opposite sides of the barrier layer and adhered through adhesive layers to the barrier layer. Additionally, there has been also proposed a fuel tank of the type wherein two polyolefin layers are disposed on the opposite surfaces of a barrier layer through adhesive layers each of which contains therein a discontinuous lamina layer, as disclosed in Japanese Patent Provisional Publication No. 6-24430.

### SUMMARY OF THE INVENTION

The above fuel tanks are produced by blow-molding a parison having a multi-layer structure. During the blow-molding, a part of the parison having the multi-layer structure is pinched between two halves of a mold to form a pinch-off area. In this pinch-off area, the barrier layer located at the intermediate position in the multi-layer structure becomes into a state of being cut, so that a preventing performance to fuel permeation cannot be obtained at the pinch-off area. Additionally, the thickness of each adhesive layer containing therein the laminar layer is so small as about 50 to 300 µm, and therefore the adhesive layer is also brought into a condition of being cut in the pinch-off area like the barrier layer thereby making it difficult to obtain the preventing performance to fuel permeation at the pinch-off area.

In order to obtain the fuel permeation preventing performance at the pinch-off area, there are proposed a method of covering the upper surface (outer surface) of the pinch-off area with a cover having a gas barrier function, a method of coating the upper surface of the pinch-off area with a resin having a gas barrier function and a method for disposing an alloy resin of polyethylene and nylon at an innermost layer forming an inner surface of the fuel tank.

However, with the method of using the cover or the coated resin, there is the fear of degrading the freedom in design as an advantage of the plastic-made fuel tank. With the method of disposing the alloy resin at the innermost layer, when surplus or excess materials produced in a production process of the fuel tank is kneaded for recycling within the production process, hydroxyl groups of EVOH resin and amide group of nylon react with each other to occur gelation, and EVOH resin deteriorates under kneading at a high temperature condition required for nylon having a high melting point, thereby providing the fear of lowering the physical properties of recycled materials. Additionally, all the methods mentioned above raise production cost of the fuel tank.

US 2003/0198768 A1 (includes the features of the preamble of claim 1) comprises an automotive plastic fuel tank with a wall having a structural layer of HDPE and a hydrocarbon fuel barrier layer of an EVOH based material with a binder layer between them.

It is, therefore, an object of the present invention to provide an improved fuel container which can effectively overcome drawbacks encountered in conventional fuel container or tanks having a multi-layer structure.

Another object of the present invention is to provide an improved fuel container which has a sufficient fuel permeation preventing performance to meet strict regulations for fuel emission control.

A further object of the present invention is to provide an improved fuel container which can have a sufficient fuel permeation interrupting effect even at a pinch-off area formed during a blow molding without degrading any advantages of a plastic-made fuel container.

According to the invention, the objects are solved by the combination of features of claim 1. The sub-claims contain further preferred developments of the invention.

### BRIEF DESCRIPTION OF THE DRAWINGS

In Figures, like reference numerals designate like parts and elements throughout all figures, in which:
Fig. 1 is a fragmentary sectional view of a first embodiment of a fuel container according to the present invention, showing a five-layer structure;
Fig. 2 is a fragmentary sectional view of a second embodiment of a fuel container according to the present invention, showing a six-layer structure;
Fig. 3 is a fragmentary sectional view of a third embodiment of the fuel container according to the present invention, showing a five-layer structure;
Fig. 4 is a fragmentary sectional view of a fourth embodiment of the fuel container according to the present invention, showing a six-layer structure;
Fig. 5 is a fragmentary sectional view, illustrating a pinch-off area formed during a blow molding of the fuel container shown in Fig. 1; and
Fig. 6 is a fragmentary sectional view, illustrating a portion of the fuel container of Fig. 3 which portion is formed with an opening for installation of a part.

### DETAILED DESCRIPTION OF THE INVENTION

According to the present invention, a fuel container having a multi-layer structure, comprising at least one fuel permeation preventing layer whose main component is a first barrier-functional resin. Additionally, at least one base material layer whose main component is a thermoplastic resin, secured to the fuel permeation preventing layer. At least one layer of the at least one base material layer contains a second barrier-functional resin homogeneous with the first barrier-functional resin to form a barrier-functional base material layer. The second barrier-functional resin is lamina-like and dispersed in the thermoplastic resin.

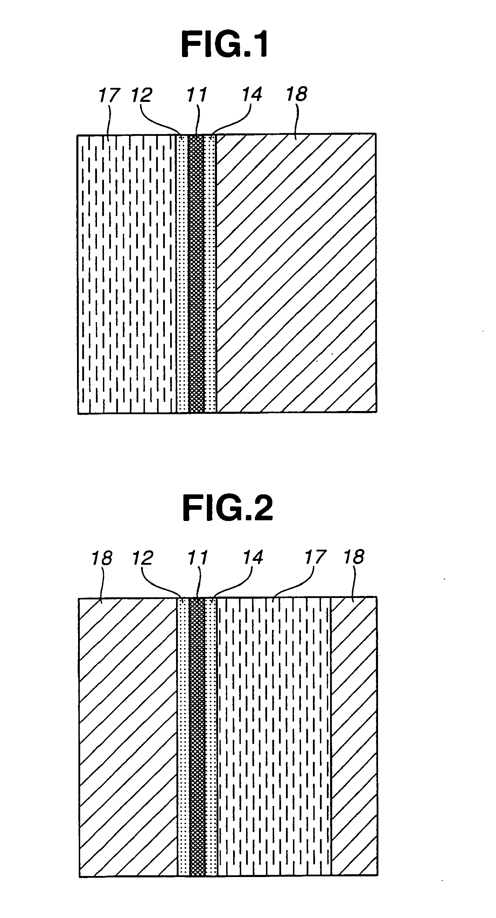

Referring now to Fig. 1, a fragmentary section of a first embodiment of a fuel container according to the present invention is illustrated. In Fig. 1, a right side corresponds to an outer side of the fuel container. The fuel container comprises fuel permeation preventing layer 11 whose main component is a first barrier-functional resin. Adhesive layers 12, 14 are disposed on the opposite sides of fuel permeation preventing layer 11 and adhered to fuel permeation preventing layer 11. Adhesive layer 14 is disposed outside of fuel permeation preventing layer 11. Base material layer 18 is disposed outside of adhesive layer 14 and adhered to the adhesive layer 14. The main component of base material layer 18 is thermoplastic resin. Barrier-functional base material layer 17 is disposed inside of adhesive layer 12 and adhered to adhesive layer 12. The above "main component" means a component contained in an amount of 50 mass % (weight %) or more.

It is preferable that the first barrier-functional resin as the main component of fuel permeation preventing layer 11 is vinyl alcohol resin and/or vinyl alcohol-based copolymer resin which is excellent in barrier characteristics to permeable fuel containing alcohol. Particularly, the barrier characteristics can be sufficiently exhibited by using polyvinyl alcohol resin (referred to as "PVOH" hereafter), ethylene-vinyl alcohol copolymer resin (referred to as "EVOH"), and/or a blend of PVOH and EVOH.

Base material layer 18 and barrier-functional base material layer 17 are intended to maintain a strengths of the fuel container such as an impact resistance. The thermoplastic resin as the main component of base material layer 18 and barrier-functional base material layer 17 is preferably olefin resin, more preferably polyethylene resin which is advantageous from the viewpoints of impact-resistance, availability and cost.

Barrier-functional base material layer 17 contains a second barrier-functional resin which is lamina-like and dispersed in the matrix or thermoplastic resin of barrier-functional base material 17. The second barrier-functional resin is homogeneous with the first barrier-functional resin as the main component of the fuel permeation preventing layer 11. Therefore, the second barrier-functional resin is preferably vinyl alcohol resin or vinyl alcohol-based copolymer resin, more preferably polyvinyl alcohol resin (PVOH), ethylene-vinyl alcohol copolymer resin (EVOH), and/or the blend of PVOH and EVOH.

The lamina-like second barrier-functional resin has a maximum length (or dimension of the longest portion) of preferably not less than 5 mm, more preferably not less than 10 mm, and a maximum thickness (or dimension of the thickest portion) of preferably not less than 10 µm, more preferably not less than 15 µm. It is preferable that the barrier-functional base material layer 17 contains 2 to 12 mass % (weight %) of the second barrier-functional resin.

Reason for setting the above maximum length and thickness of the second barrier-functional resin will be discussed. If the maximum length of the second barrier-functional resin is less than 5 mm, an interrupting performance to the permeable fuel may be degraded according to the content and the like of the second barrier-functional resin in the barrier-functional base material layer 17. It is made possible to more securely obtain the interrupting performance to the permeable fuel by setting the maximum length at a value of not less than 5 mm. If the maximum thickness is less than 10 µm, the interrupting performance to the permeable fuel may be degraded according to the content and the like of the second barrier-functional resin. It is made possible to more securely obtain the interrupting performance to the permeable fuel by setting the maximum thickness at a value of not less than 10 µm.

Reason for setting the above content of the second barrier-functional resin will be discussed. If the content of the second barrier-functional resin is less than 2 mass %, the interrupting performance to the permeable fuel may be degraded. If the content exceeds 12 mass %, the strength of the barrier-functional base material layer 17 may be insufficient. Thus, both the interrupting performance to the permeable fuel and the strength of the barrier-functional base material layer 17 can be securely obtained by setting the content of the second barrier-functional resin at a value of 2 to 12 mass%. The content of the second barrier-functional resin is more preferably 3 to 10 mass %, the most preferably 3 to 7 mass %.

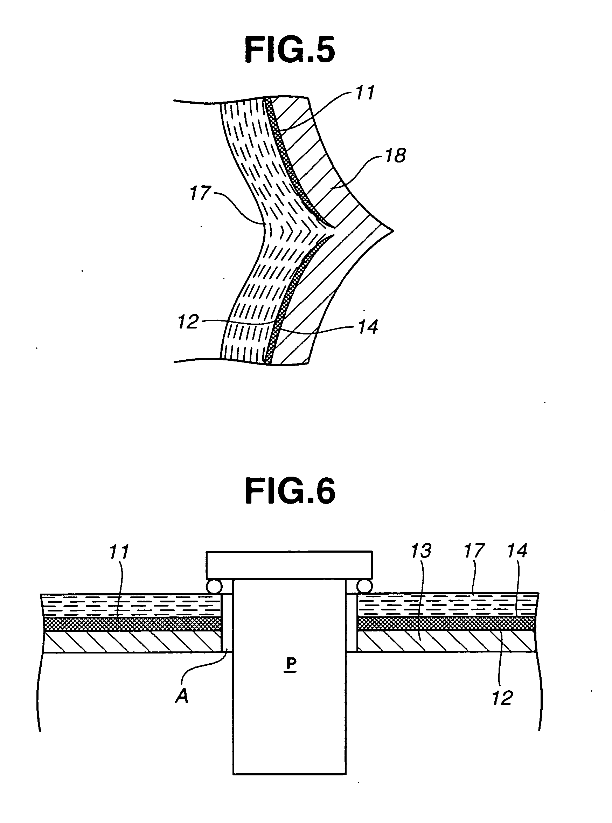

The above fuel container is produced by blow-molding a multi-layered parison. More specifically, the parison having fuel permeation preventing layer 11, two adhesive layers 12, 14, base material layer 18 and barrier-functional base material layer 17 is extruded by an extruder. The parison is then put between two halves of an open blow mold, and thereafter the blow mold is closed, followed by expanding the parison within the blow mold with pressurized air so as to form the parison into a certain shape. Here, during the above blow molding, when the parison is put between the two halves of the blow molding to form pinch-off areas each of which is pinched by portions of the respective two halves of the blow molding, fuel permeation preventing layer 11 located at the central position of the five layers 17, 12, 11, 14, 18 may become in a condition of being cut so as to form a clearance as shown in Fig. 5. However, the lamina-like second barrier-functional resin having a function to prevent fuel permeation is dispersed in the permeation preventing layer 11, and therefore the fuel container can be effectively prevented from fuel permeation made around the pinch-off areas under the action of the second barrier-functional resin.

Thus, the fuel container can obtain an interrupting performance to fuel permeation made around the pinch-off areas under the action of barrier-functional base material 17 containing the second barrier-functional resin without degrading advantages of the plastic-made fuel container. Additionally, by virtue of fuel permeation preventing layer 11 and barrier-functional base material layer 17, the interrupting performance to fuel permeation through the whole fuel container can be further improved. Furthermore, since the EVOH resin and/or the PVOH is used as the second barrier-functional resin, the fuel container is very effective for preventing fuel permeation not only in case of being filled with usual gasoline but also in case of being filled with gasoline mixed with alcohol.

In general, when a fuel container of an automotive vehicle is blow-molded, a surplus or excess material (the surplus of the parison separated from the blow-molded fuel container) formed during a blow molding process of the fuel container reach to 30 to 50 % in weight of a fuel container or tank. Accordingly, the surplus materials are recycled in the blow molding process. In this regard, fuel container has base material layer 18 and barrier-functional base material layer 17 which are the same in their main component, and the second barrier-functional resin contained in barrier-functional base material 17 is homogeneous with the first barrier-functional resin as the main component of fuel permeation preventing layer 11. As a result, chemical reactions can be prevented from occurring when the resins are molten and kneaded in the extruder, and therefore there is no problem of the physical properties of recycled materials being degraded, thus making it possible to stably recycle the reminder materials formed in the blow molding process.

In the blow molding of the fuel container, the EVOH resin and/or the PVOH resin is blended to the main component of the barrier-functional base material layer 17 in a state of dry blend or by only changing a screw in the extruder to form the barrier-functional base material layer 17. Accordingly, an existing production equipment for fuel container can be used as it is thereby making it possible to produce the super low fuel-permeable fuel container under inexpensive facility investment.

Since the fuel container has an outermost layer which is base material layer 18 as shown in Fig. 1, the outermost layer can be prevented from cracking when impact is applied to the outermost layer from outside. Additionally, in case that plastic parts such as piping and connectors are welded to the outer surface of the outermost layer, stable weldability of the plastic parts can be obtained.

Fig. 2 illustrates a fragmentary section of a second embodiment of the fuel container according to the present invention, similar to that of the first embodiment. In this second embodiment, the fuel container comprises fuel permeation preventing layer 11 whose main component is the first barrier-functional resin. Adhesive layers 12, 14 are disposed on the opposite sides of fuel permeation preventing layer 11 and adhered to fuel permeation preventing layer 11. Adhesive layer 14 is disposed outside of the fuel permeation preventing layer 11. Barrier-functional base material layer 17 containing the dispersed lamina-like second barrier-functional resin is disposed outside of adhesive layer 14 and adhered to adhesive layer 14. Base material layer 18 is disposed outside of barrier-functional base material layer 17 and adhered to barrier-functional base material layer 17. Another base material layer 18 is disposed inside of adhesive layer 12 and adhered to adhesive layer 12. Thus, the fuel container of this embodiment takes a six-layer structure.

With the fuel container of this embodiment, the same advantageous effects as those of the fuel container of the first embodiment can be obtained. Additionally, since the outermost layer is base material layer 18, the outermost layer can be prevented from cracking when impact is applied to the outermost layer from outside. Further, stable weldability of the plastic parts to the outer surface of the outermost layer can be obtained.

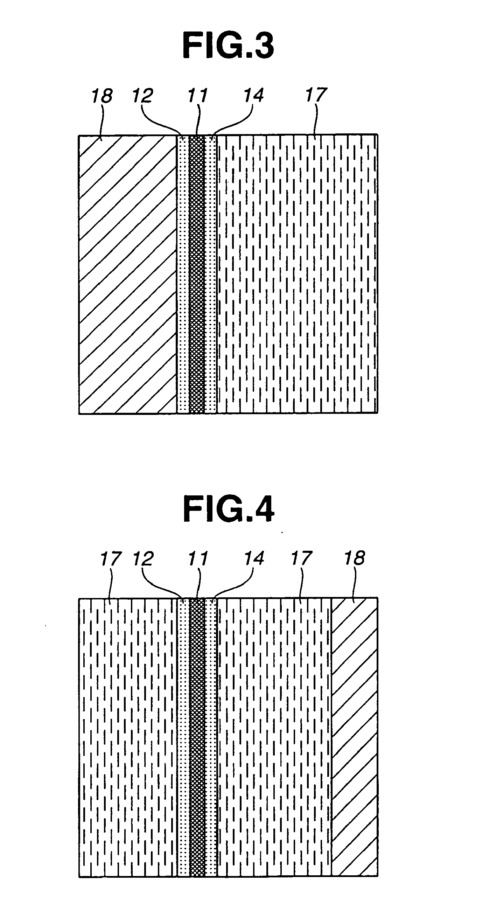

Fig. 3 illustrates a fragmentary section of a third embodiment of the fuel container according to the present invention, similar to that of the first embodiment. In this third embodiment, the fuel container comprises fuel permeation preventing layer 11 whose main component is the first barrier-functional resin. Adhesive layers 12, 14 are disposed on the opposite sides of fuel permeation preventing layer 11 and adhered to fuel permeation preventing layer 11. Adhesive layer 14 is disposed outside of the fuel permeation preventing layer 11 and adhered to fuel permeation preventing layer 11. Barrier-functional base material layer 17 containing the dispersed lamina-like second barrier-functional resin is disposed outside of adhesive layer 14 and adhered to adhesive layer 14. Base material layer 18 is disposed inside of adhesive layer 14 and adhered to adhesive layer 12. Thus, the fuel container of this embodiment takes a five-layer structure.

With the fuel container of this embodiment, similarly to the above embodiments, the interrupting performance to fuel permeation made around the pinch-off areas formed during the blow molding can be effectively obtained while ensuring the interrupting performance to fuel permeation through the whole fuel container. Additionally, since the innermost layer is the base material layer 18, the innermost layer can be prevented from cracking when impact is applied from outside.

In case that the fuel container is used as a fuel tank of an automotive vehicle, the fuel container is formed with an opening A as shown in Fig. 6 in order to install a part P such as a pump, a piping or a connector. Here, if the fuel container takes the structure shown in Fig. 3 where barrier-functional base material layer 17 is disposed outside of the fuel permeation preventing layer 11, permeation of the permeable fuel to the outside of the fuel container can be effectively suppressed by virtue of the second barrier-functional resin dispersed in barrier-functional base material 17 even if the permeable fuel permeates through a wall surface (of the fuel container) defining the opening A.

Fig. 4 illustrates a fragmentary section of a fourth embodiment of the fuel container according to the present invention, similar to that of the first embodiment. In this fourth embodiment, the fuel container comprises fuel permeation preventing layer 11 whose main component is the first barrier-functional resin. Adhesive layers 12, 14 are disposed on the opposite sides of fuel permeation preventing layer 11 and adhered to fuel permeation preventing layer 11. Adhesive layer 14 is disposed outside of fuel permeation preventing layer 11 and adhered to fuel permeation preventing layer 11. Barrier-functional base material layer 17 containing the dispersed lamina-like second barrier-functional resin is disposed outside of adhesive layer 14 and adhered to adhesive layer 14. Base material layer 18 is disposed outside of barrier-functional base material layer 17 and adhered to barrier-functional base material layer 17. Another barrier-functional base material layer 17 containing the dispersed lamina-like second barrier-functional resin is disposed inside of adhesive layer 12 and adhered to adhesive layer 12. Thus, the fuel container of this embodiment takes a six-layer structure.

With the fuel container of this embodiment, since two barrier-functional base material layers 17, 17 are provided, the interrupting performance to fuel permeation made around the pinch-off areas formed during the blow molding can be further improved while improving the preventing ability for fuel permeation through the whole fuel container. Additionally, the outermost layer is the base material layer 18, and therefore the outermost layer can be prevented from cracking when impact is applied to the outermost layer from outside, while improving the weldability of plastic parts to the fuel container.

While examples of basic arrangements of the fuel container according to the present invention have been shown and described in Figs. 1 to 4, it will be understood that arrangements other than those basic arrangements may be applied to the fuel container, in which the number, thickness and disposition of the layers constituting of the fuel container are freely selectable according to required fuel barrier performance and impact resistance of the fuel container.

### EXAMPLES

The present invention will be more readily understood with reference to the following Examples in comparison with Comparative Examples; however, these Examples are intended to illustrate the invention and are not to be construed to limit the scope of the invention.

### EXAMPLE 1

A fuel container was produced having a layer structure as shown in Fig. 1 by blow molding. The fuel container included a fuel permeation preventing layer whose main component was EVOH resin which was available from Kuraray Co., Ltd. under the trade name of Eval F101B. First and second adhesive layers were disposed on the opposite sides of the fuel permeation preventing layer and adhered to the fuel permeation preventing layer. The adhesive layers were formed of maleic anhydride-modified polyethylene available from Japan Polyethylene Corporation under the trade name of FT61AR3. The first adhesive layer was disposed outside of fuel permeation preventing layer and adhered to the fuel permeation preventing layer. A base material layer as an outermost layer was disposed outside of the first adhesive layer and adhered to the first adhesive layer. The base material layer was formed of high density polyethylene available from Japan Polyethylene Corporation under the trade name of KBY47C. A barrier-functional base material layer as an innermost layer was disposed inside of the second adhesive layer and adhered to the second adhesive layer. The barrier-functional base material contained the high density polyethylene as a main component, and 8.0 mass % of barrier-functional resin mixture containing 4.0 mass % of lamina-like barrier-functional resin (PVOH resin) and 4.0 mass % of a dispersant (for the barrier-functional resin) and the like so that the lamina-like barrier-functional resin was dispersed in the main component. The barrier-functional resin mixture was available from DuPont under the trade name of RB425, in which the lamina-like barrier-functional resin had the maximum length of not less than 5 mm and the maximum thickness of not less than 10 µm.

The barrier-functional base material layer had a thickness of 2.0 mm. The second adhesive layer had a thickness of 0.1 mm. The fuel permeation preventing layer had a thickness of 0.1 mm. The first adhesive layer had a thickness of 0.1 mm. The base material layer had a thickness of 3.7 mm. The produced fuel container had a thickness of 6.0 mm and a volume of 60 liters, and took a five-layer structure.

### EXAMPLE 2

A fuel container was produced having a layer structure as shown in Fig. 2 by blow molding. The fuel container included a fuel permeation preventing layer. First and second adhesive layers were disposed on the opposite sides of the fuel permeation preventing layer and adhered to the fuel permeation preventing layer. The first adhesive layer was disposed outside of the fuel permeation preventing layer and adhered to the fuel permeation preventing layer. A barrier-functional base material layer was disposed outside of the first adhesive layer and adhered to the first adhesive layer. A first base material layer as an outermost layer was disposed outside of the barrier-functional base material layer and adhered to the barrier-functional base material layer. The second adhesive layer was disposed inside of the fuel permeation preventing layer and adhered to the fuel permeation preventing layer. A second base material layer as an innermost layer was disposed inside of the second adhesive layer and adhered to the second adhesive layer.

The barrier-functional base material layer, the first and second adhesive layers, the fuel permeation preventing layer and the base material layer were respectively formed of the same materials as those of the corresponding layers in Example 1.

The second base material layer had a thickness of 2.0 mm. The second adhesive layer had a thickness of 0.1 mm. The fuel permeation preventing layer had a thickness of 0.1 mm. The first adhesive layer had a thickness of 0.1 mm. The barrier-functional base material had a thickness of 2.7 mm. The first base material layer had a thickness of 1.0 mm. The produced fuel container had a thickness of 6.0 mm and a volume of 60 liters, and took a six-layer structure.

### EXAMPLE 3

A fuel container was produced having a layer structure as shown in Fig. 3 by blow molding. The fuel container included a fuel permeation preventing layer. First and second adhesive layers were disposed on the opposite sides of the fuel permeation preventing layer and adhered to the fuel permeation preventing layer. The first adhesive layer was disposed outside of the fuel permeation preventing layer and adhered to the fuel permeation preventing layer. A barrier-functional base material layer as an outermost layer was disposed outside of the first adhesive layer and adhered to the first adhesive layer. The second adhesive layer was disposed inside of the fuel permeation preventing layer and adhered to the fuel permeation preventing layer. A base material layer as an innermost layer was disposed inside of the second adhesive layer and adhered to the second adhesive layer.

The barrier-functional base material layer, the first and second adhesive layers, the fuel permeation preventing layer and the base material layer were respectively formed of the same materials as those of the corresponding layers in Example 1.

The base material layer had a thickness of 2.0 mm. The second adhesive layer had a thickness of 0.1 mm. The fuel permeation preventing layer had a thickness of 0.1 mm. The first adhesive layer had a thickness of 0.1 mm. The barrier-functional base material had a thickness of 3.7 mm. The produced fuel container had a thickness of 6.0 mm and a volume of 60 liters, and took a five-layer structure.

### EXAMPLE 4

A fuel container was produced having a layer structure as shown in Fig. 4 by blow molding. The fuel container included a fuel permeation preventing layer. First and second adhesive layers were disposed on the opposite sides of the fuel permeation preventing layer and adhered to the fuel permeation preventing layer. The first adhesive layer was disposed outside of the fuel permeation preventing layer and adhered to the fuel permeation preventing layer. A first barrier-functional base material layer was disposed outside of the first adhesive layer and adhered to the first adhesive layer. A base material layer as an outermost layer was disposed outside of the first barrier-functional base material layer and adhered to the first barrier-functional base material layer. The second adhesive layer was disposed inside of the fuel permeation preventing layer and adhered to the fuel permeation preventing layer. A second barrier-functional base material layer as an innermost layer was disposed inside of the second adhesive layer and adhered to the second adhesive layer.

The barrier-functional base material layer, the first and second adhesive layers, the fuel permeation preventing layer and the base material layer were respectively formed of the same materials as those of the corresponding layers in Example 1.

The second barrier-functional base material layer had a thickness of 2.0 mm. The second adhesive layer had a thickness of 0.1 mm. The fuel permeation preventing layer had a thickness of 0.1 mm. The first adhesive layer had a thickness of 0.1 mm. The first barrier-functional base material layer had a thickness of 2.7 mm. The base material layer had a thickness of 1.0 mm. The produced fuel container had a thickness of 6.0 mm and a volume of 60 liters, and took a six-layer structure.

### EXAMPLE 5

The procedure of Example 2 was repeated to produce a fuel container of this Example having a layer structure as shown in Fig. 2 by blow molding, with the exception that the barrier-functional base material contained 4.0 mass % of the barrier-functional resin mixture containing 2.0 mass % of the lamina-like barrier-functional resin (PVOH resin) and 2.0 mass % of the dispersant and the like.

### EXAMPLE 6

The procedure of Example 2 was repeated to produce a fuel container of this Example having a layer structure as shown in Fig. 2 by blow molding, with the exception that the barrier-functional base material contained 12.0 mass % of the lamina-like barrier-functional resin (PVOH resin) and 12.0 mass % of the dispersant and the like.

### EXAMPLE 7

The procedure of Example 2 was repeated to produce a fuel container of this Example having a layer structure as shown in Fig. 2 by blow molding, with the exception that the lamina-like barrier-functional resin (PVOH) contained in the barrier-functional base material had the maximum length of 3 mm (in maximum value).

### EXAMPLE 8

The procedure of Example 2 was repeated to produce a fuel container of this Example having a layer structure as shown in Fig. 2 by blow molding, with the exception that the lamina-like barrier-functional resin (PVOH) contained in the barrier-functional base material had the maximum thickness of 5µm (in maximum value).

### COMPARATIVE EXAMPLE 1

A fuel container was produced by blow molding. The fuel container included a fuel permeation preventing layer. First and second adhesive layers were disposed on the opposite sides of the fuel permeation preventing layer and adhered to the fuel permeation preventing layer. The first adhesive layer was disposed outside of the fuel permeation preventing layer and adhered to the fuel permeation preventing layer. A first base material layer as an outermost layer was disposed outside of the first adhesive layer and adhered to the first adhesive layer. The second adhesive layer was disposed inside of the fuel permeation preventing layer and adhered to the fuel permeation preventing layer. A second base material layer as an innermost layer was disposed inside of the second adhesive layer and adhered to the second adhesive layer.

The first and second adhesive layers, the fuel permeation preventing layer and the base material layer were respectively formed of the same materials as those of the corresponding layers in Example 1.

The second base material layer had a thickness of 2.0 mm. The second adhesive layer had a thickness of 0.1 mm. The fuel permeation preventing layer had a thickness of 0.1 mm. The first adhesive layer had a thickness of 0.1 mm. The first base material layer had a thickness of 3.7 mm. The produced fuel container had a thickness of 6.0 mm and a volume of 60 liters, and took a five-layer structure including no barrier-functional base material layer of the present invention.

### COMPARATIVE EXAMPLE 2

The procedure of Example 2 was repeated to produce a fuel container of this Example having a layer structure as shown in Fig. 2 by blow molding, with the exception that the barrier-functional base material contained 1.0 mass % of the lamina-like barrier-functional resin (PVOH resin) and 1.0 mass % of the dispersant and the like.

### COMPARATIVE EXAMPLE 3

The procedure of Example 2 was repeated to produce a fuel container of this Example having a layer structure as shown in Fig. 2 by blow molding, with the exception that the barrier-functional base material contained 15.0 mass % of the lamina-like barrier-functional resin (PVOH resin) and 15.0 mass % of the dispersant and the like.

### COMPARATIVE EXAMPLE 4

The procedure of Example 2 was repeated to produce a fuel container of this Example having a layer structure as shown in Fig. 2 by blow molding, with the exception that the lamina-like barrier-functional resin in the barrier-functional base material was nylon-based and available from DuPont under the trade name of RB901. The barrier-functional base material contained 4.0 mass % of the lamina-like barrier-functional resin and 4.0 mass % of the dispersant and the like.

### EVALUATION TEST

In order to evaluate performances of the fuel containers of Examples and Comparative Examples, tests for evaluating fuel permeation preventing characteristics, low temperature impact-resistance and surplus material recycling characteristics were conducted.

### Fuel Permeation Preventing Characteristics

The fuel container produced by the blow molding and having a volume of 60 liters was filled with a fuel and allowed to stand in an atmosphere of 40 °C, in which a fuel permeation amount (the amount of the fuel to be emitted out of the fuel container) was measured at the intervals of 500 hours until the fuel permeation amount was saturated. This measurement was conducted by using a VT-SHED (Variable Temperature - Sealed Housing for Evaporative Emissions) which was available from JAPS corporation. The fuel used in this measurement was a mixture of Indolene and ethanol, in which the ethanol was contained in an amount of 10 vol.% based on the Indolene. The Indolene was a standard test fuel approved by EPA (Environmental Protection Agency) in U.S.A.

### Low Temperature Impact resistance

A test piece having a dimension of 6 mm thickness, 65 mm length and 65 mm width was cut out from a flat wall section of the fuel container produced by the blow molding. The test piece was subjected to a high-speed surface impact test using a high-speed surface impact tester available from Shimadzu Corporation. The high-speed surface impact test was conducted according to ASTM D3763 and under a condition where the temperature of an atmosphere was -40 °C; the diameter of a dart was 1/2 inch; and the speed of the dart was 11.1 m/s, thereby measuring an impact energy for evaluating an impact-resistance.

### Surplus Material Recycling Characteristics

### (a) Impact-resistance of Recycled Surplus Material

The fuel container produced by the blow molding was pulverized and re-pelletized to form pellets. The thus formed pellets were thermo-pressed to produce a test piece having a dimension of 3 mm thickness, 65 mm length and 65 mm width. The test piece was subjected to a high-speed surface impact test using a high-speed surface impact tester available from Shimadzu Corporation. The high-speed surface impact test was conducted according to ASTM D3763 and under a condition where the temperature of an atmosphere was -40 °C; the diameter of a dart was 1/2 inch; and the speed of the dart was 11.1 m/s, thereby measuring an impact energy for evaluating an impact-resistance.

### (b) Kneading Stability of Recycled Surplus Material

In order to evaluate a kneading stability of the recycled surplus material, the pulverized fuel container was kneaded in a laboratory plastomill in the atmosphere of air at 230 °C for 1 hour to measure a torque change of the plastomill.

Results of the above evaluation tests are shown in Table 1. Concerning the fuel permeation preventing characteristics and the low temperature impact resistance of the fuel container, and the impact resistance of the recycled surplus material, those of Comparative Example 1 are taken as standards, in which those excellent as compared with the standards are indicated by "A"; those generally equivalent to the standards are indicated by "B"; and those inferior as compared with the standards are indicated by "C". Concerning the kneading stability of the recycled surplus material, if the torque change falls within ±20% for a time from first time point (5 minutes from the initiation of the kneading) to a second time point (60 minutes from the initiation of the kneading), an evaluation is such that the kneading stability is sufficient and indicated by "A". If the torque change does not fall within ±20%, an evaluation is such that the kneading stability is insufficient and indicated by "B". Concerning a total evaluation, if the test piece is sufficient in fuel permeation preventing effect, it is indicated by "A".

**TABLE 1**

| Test piece | Fuel permeation preventing characteristics of fuel container | Low temp. impact resistance of fuel container | Impact resistance of recycled surplus material | Kneading stability of recycled surplus material | Total evaluation |
|---|---|---|---|---|---|
| Example 1 | A | B | B | A | A |
| Example 2 | A | B | B | A | A |
| Example 3 | A | B | B | A | A |
| Example 4 | A | B | B | A | A |
| Example 5 | A | B | B | A | A |
| Example 6 | A | B | B | A | A |
| Example 7 | A | B | B | A | A |
| Example 8 | A | B | B | A | A |
| Comparative example 1 | Standard | Standard | Standard | A | Standard |
| Comparative example 2 | B | B | B | A | Insufficient in fuel permeation preventing effect |
| Comparative example 3 | A | C | C | A | Insufficient in impact resistance |
| Comparative example 4 | - | - | - | Torque-up occurred | Difficult in recycling of surplus material |

As apparent from the evaluation results in Fig. 1, the fuel containers of Examples 1 to 8 were excellent in fuel permeation preventing characteristics as compared with the fuel container of Comparative Example 1 while meeting required performances of low temperature impact resistance and surplus material recycling characteristics for fuel containers. The fuel container of Example 7 using the lamina-like resin having the maximum length of 3 mm and the fuel container of Example 8 using the lamina-like barrier-functional resin having the maximum thickness of 5 µm were slightly low in fuel permeation preventing characteristics but improved in surplus material recycling characteristics as compared with the fuel containers of Examples 1 to 6 using the lamina-like barrier-functional resin having the maximum length of not less than 5 mm and the maximum thickness of not less than 10 µm.

The test results of Examples 2, 5 and 6 and Comparative Example 2 which were the same in layer structure depicted that the fuel permeation preventing effect could not be obtained if the content of the PVOH resin was not more than 1.0 mass % while the impact resistance of the fuel container and the physical properties of the recycled surplus material were lowered if the content of the PVOH resin was not less than 15.0 mass %. Additionally, it would be appreciated the suitable content range of the PVOH resin was not less than 2.0 mass % and not more than 12.0 mass %, particularly from Examples 5 and 6.

Further, it was confirmed from the test results of Example 2 and Comparative Example 4, that the torque of the laboratory plastomill was stable in the kneading stability test thereby providing no problem in the melting and kneading in the surplus material recycling process in case where the barrier-functional resin in the barrier-functional base material layer was of vinyl alcohol-based resin (PVOH resin and/or EVOH resin) which was homogeneous with that of EVOH resin as the main component of the fuel permeation preventing layer. In contrast, in case where the barrier-functional resin in the barrier-functional material layer was a nylon-based resin, the torque-change occurred in the kneading stability test thereby making an extrusion of the resin unstable.

While the fuel container according to the present invention has been shown and described in detail with reference to Examples, it will be understood that the arrangements of the fuel container according to the present invention are not limited to those of Examples and therefore a variety of modifications may be made within the scope of the present invention. For example, from the viewpoints of materials, in order to improve the barrier-function of the barrier-functional base material layer, different barrier-functional resin(s) from and not reactive to the first and second barrier-functional resins may be blended with the second barrier-functional resin in such an amount that the total amount of the different barrier-functional resin(s) and the second barrier-functional resin was within the preferable range of the second barrier-functional resin.

Moreover, it may be made to add an elastomer component in the barrier-functional base material layer in order to improve the impact resistance of the fuel container. Additionally, to control a barrier performance of the fuel container, a dispersant for PVOH resin or/or EVOH resin may be suitably added to the barrier-functional base material. Besides, a heat stabilizer, an oxidation inhibitor, and/or a processing aid may be added to the barrier-functional base material if necessary.

As appreciated from the above, according to the present invention, even if the fuel permeation preventing layer is cut at the pinch-off area during the blow molding of the parison having the multi-layer structure including the base material, the barrier-functional base material layer and the fuel permeation preventing layer, the preventing performance to fuel permeation around the pinch-off area can be obtained by virtue of the second barrier-functional resin dispersed in the thermoplastic resin of the barrier-functional base material, while improving a total fuel permeation preventing performance of the fuel container under the effect of the fuel permeation preventing layer and the barrier-functional base material layer. As a result, it is unnecessary to form a cover or a resin coating at the pinch-off area, and therefore an improvement in fuel permeation preventing performance can be effectively realized without degrading any advantages of a plastic-made fuel container, such as being light in weight, high in freedom in design, excellent in corrosion resistance and low in cost. Additionally, in the fuel container, the main components of the base material layer and the barrier-functional base material layer are the same, and the second barrier-functional resin is homogeneous with the first barrier-functional resin. Accordingly, chemical reactions are prevented from occurring when surplus or excess materials produced in a production process of the fuel tank are kneaded for recycling within the production process, thereby providing no fear of lowering the physical properties of recycled materials. Thus, recycling of the surplus materials can be readily accomplished with no problem.

## Claims

1. A fuel container having a multi-layer structure, comprising:
- at least one fuel permeation preventing layer (11) whose main component is a first barrier-functional resin;
- at least one base material layer (18) whose main component is a thermoplastic resin, the at least one base material layer being secured to the fuel permeation preventing layer;
**characterized by**
- at least one barrier-functional base material layer (17) whose main component is a thermoplastic resin, the at least one barrier-functional base material layer (17) being secured to the fuel permeation preventing layer (11), the barrier-functional base material layer (17) containing a second barrier-functional resin which is homogeneous with the first barrier-functional resin, the second barrier-functional resin being lamina-like and dispersed in the thermoplastic resin of the at least one barrier-functional base material layer (17).

2. A fuel container as claimed in Claim 1, wherein the barrier-functional base material layer (17) is disposed outside of the fuel permeation preventing layer.

3. A fuel container as claimed in Clam 1, wherein the barrier-functional base material layer (17) is disposed inside of the fuel permeation preventing layer.

4. A fuel container as claimed in any of Claims 1 to 3, wherein the base material layer serves as an innermost layer (18) of the fuel container.

5. A fuel container as claimed in any of Claims 1 to 4, wherein the base material layer (18) serves as an outermost layer of the fuel container.

6. A fuel container as claimed in any of Claims 1 to 5, wherein the thermoplastic resin as the main component of the base material layer (18) is olefin resin, wherein each of the first and second barrier-functional resins is at least one of vinyl alcohol resin and vinyl alcohol-based copolymer resin.

7. A fuel container as claimed in Claim 6, wherein the olefin resin as the main component of the base material layer (18) is polyethylene, wherein each of the first and second barrier-functional resins is at least one selected from the group consisting of ethylene-vinyl alcohol copolymer resin, polyvinyl alcohol resin and a mixture of ethylene-vinyl alcohol copolymer and polyvinyl alcohol resin.

8. A fuel container as claimed in any of Claims 1 to 7, wherein the lamina-like second barrier-functional resin has a maximum length of not less than 5 mm.

9. A fuel container as claimed in any of Claims 1 to 8, wherein the lamina-like second barrier-functional resin has a maximum thickness of not less than 10 µm.

10. A fuel container as claimed in any of Claims 1 to 9, wherein the barrier-functional base material layer (17) contains the second barrier-functional resin in an amount ranging from 2 to 12 mass %.

11. A fuel container as claimed in any of Claims 1 to 10, wherein the fuel container is produced by blow-molding a parison of a multi-layer structure.

## Patentansprüche

1. Kraftstoffbehälter mit einem mehrschichtigen Aufbau, umfassend:
- zumindest eine Kraftstoffdurchdringungs-Verhinderungsschicht (11), deren Hauptbestandteil ein erstes sperrfunkionales Harz ist;
- zumindest eine Basismaterialschicht (18), deren Hauptbestandteil ein Thermoplastharz ist, wobei die zumindest eine Basismaterialschicht an der Kraftstoffdurchdringungs-Verhinderungsschicht befestigt ist;
**gekennzeichnet durch**:
- zumindest eine sperrfunktionale Basismaterialschicht (17), deren Hauptbestandteil ein Thermoplastharz ist, wobei die zumindest eine sperrfunktionale Basismaterialschicht (17) an der Kraftstoffdurchdringungs-Verhinderungsschicht (11) befestigt ist, wobei die sperrfunktionale Basismaterialsschicht (17) ein zweites sperrfunktionales Harz enthält, das mit dem ersten sperrfunktionalen Harz homogen ist, wobei das zweite sperrfunktionale Harz plättchenartig ist und in dem Thermoplastharz der zumindest einen sperrfunktionalen Basismaterialschicht (17) verteilt ist.

2. Kraftstoffbehälter nach Anspruch 1, wobei die sperrfunktionale Basismaterialschicht (17) außerhalb der Kraftstoffdurchdringungs-Verhinderungsschicht angeordnet ist.

3. Kraftstoffbehälter nach Anspruch 1, wobei die sperrfunktionale Basismaterialschicht (17) innerhalb der Kraftstoffdurchdringungs-Verhinderungsschicht angeordnet ist.

4. Kraftstoffbehälter nach einem der Ansprüche 1 bis 3, wobei die Basismaterialschicht als eine innerste Schicht (18) des Kraftstoffbehälters dient.

5. Kraftstoffbehälter nach einem der Ansprüche 1 bis 4, wobei die Basismaterialschicht (18) als eine äußerste Schicht des Kraftstoffbehälters dient.

6. Kraftstoffbehälter nach einem der Ansprüche 1 bis 5, wobei das Thermoplastharz als der Hauptbestandteil der Basismaterialschicht (18) Olefinharz ist, wobei das erste und das zweite sperrfunktionale Harz zumindest ein Vinylalkoholharz und/oder ein vinylalkoholbasiertes Copolymerharz ist.

7. Kraftstoffbehälter nach Anspruch 6, wobei das Olefinharz als der Hauptbestandteil der Basismaterialschicht (18) Polyethylen ist, wobei das erste und das zweite sperrfunktionale Harz zumindest eines, ausgewählt aus der Gruppe bestehend aus Ethylenvinylalkohol-Copolymerharz, Polyvinylalkoholharz und einer Mischung aus Ethylenvinylalkohol-Copolymerharz und Polyvinylalkoholharz, ist.

8. Kraftstoffbehälter nach einem der Ansprüche 1 bis 7, wobei das plättchenartige zweite sperrfunktionale Harz eine maximale Länge von nicht weniger als 5 mm aufweist.

9. Kraftstoffbehälter nach einem der Ansprüche 1 bis 8, wobei das plättchenartige zweite sperrfunktionale Harz eine maximale Dicke von nicht weniger als 10 µm aufweist.

10. Kraftstoffbehälter nach einem der Ansprüche 1 bis 9, wobei die sperrfunktionale Basismaterialschicht (17) das zweite sperrfunktionale Harz in einer Menge von 2 bis 12 % der Masse enthält.

11. Kraftstoffbehälter nach einem der Ansprüche 1 bis 10, wobei der Kraftstoffbehälter durch Blasformen eines Vorformlings einer mehrschichtigen Struktur hergestellt wird.

## Revendications

1. Conteneur de carburant présentant une structure multicouches, comprenant :
- au moins une couche anti-fuite de carburant (11) dont le composant principal est une première résine à fonction barrière ;
- au moins une couche de matériau de base (18) dont le composant principal est une résine thermoplastique (18), la au moins une couche de matériau de base étant fixée à la couche anti-fuite de carburant ;
**caractérisé par**
- au moins une couche de matériau de base à fonction barrière (17) dont le composant principal est une résine thermoplastique, la au moins une couche de matériau de base à fonction barrière (17) étant fixée à la couche anti-fuite de carburant (11), la couche de matériau de base à fonction barrière (17) contenant une seconde résine à fonction barrière qui est homogène avec la première résine à fonction barrière, la seconde résine à fonction barrière étant du type feuille et dispersée dans la résine thermoplastique de la au moins une couche de matériau de base à fonction barrière (17).

2. Conteneur de carburant selon la revendication 1, dans lequel la couche de matériau de base à fonction barrière (17) est disposée à l'extérieur de la couche anti-fuite de carburant.

3. Conteneur de carburant selon la revendication 1, dans lequel la couche de matériau de base à fonction barrière (17) est disposée à l'intérieur de la couche anti-fuite de carburant.

4. Conteneur de carburant selon l'une quelconque des revendications 1 à 3, dans lequel la couche de matériau de base sert de couche la plus intérieure (18) du conteneur de carburant.

5. Conteneur de carburant selon l'une quelconque des revendications 1 à 4, dans lequel la couche de matériau de base (18) sert de couche la plus extérieure du conteneur de carburant.

6. Conteneur de carburant selon l'une quelconque des revendications 1 à 5, dans lequel la résine thermoplastique comme composant principal de la couche de matériau de base (18) est une résine oléfine, dans lequel chacune des première et seconde résines à fonction barrière est au moins une parmi la résine d'alcool vinylique et la résine de copolymère à base d'alcool vinylique.

7. Conteneur de carburant selon la revendication 6, dans lequel la résine oléfine comme composant principal de la couche de matériau de base (18) est le polyéthylène, dans lequel chacune des première et seconde résines à fonction barrière est au moins une sélectionnée parmi le groupe constitué de la résine de copolymère d'alcool vinylique, la résine d'alcool polyvinylique et un mélange de copolymère d'alcool éthylène-vinyle et de résine d'alcool polyvinylique.

8. Conteneur de carburant selon l'une quelconque des revendications 1 à 7, dans lequel la seconde résine à fonction barrière de type feuille présente une longueur maximale non inférieure à 5 mm.

9. Conteneur de carburant selon l'une quelconque des revendications 1 à 8, dans lequel la seconde résine à fonction barrière de type feuille présente une épaisseur maximale non inférieure à 10 µm.

10. Conteneur de carburant selon l'une quelconque des revendications 1 à 9, dans lequel la couche de matériau de base à fonction barrière (17) contient la seconde résine à fonction barrière dans une quantité allant de 2 à 12% en masse.

11. Conteneur de carburant selon l'une quelconque des revendications 1 à 10, dans lequel le conteneur de carburant est produit par moulage par extrusion soufflage d'une paraison d'une structure multicouches.
